# EUROPÄISCHE PATENTSCHRIFT

(11) **EP 2 369 169 B1**
(45) Veröffentlichungstag und Bekanntmachung des Hinweises auf die Patenterteilung: **29.03.2017**
(21) Anmeldenummer: 10193688.8
(22) Anmeldetag: 03.12.2010
(51) Int. Cl.: F03B 5/00, H02P 3/22, H02P 9/02

(54) **Wasserkraftanlage**
Water power plant
Centrale hydroélectrique

(30) Priorität: 09.03.2010 DE 202010003347 U
(43) Veröffentlichungstag der Anmeldung: 28.09.2011
(73) Patentinhaber: Ritz-Atro GmbH, 93426 Roding (DE)
(72) Erfinder: Glosemeyer, Ludger, 91207 Lauf an der Pegnitz (DE)
(74) Vertreter: Epping - Hermann - Fischer

(56) Entgegenhaltungen:
- EP-A2- 0 222 352
- EP-A2- 1 863 162
- WO-A1-2006/010783
- WO-A2-2008/031426
- US-A1- 2007 216 164

## Beschreibung

Die Erfindung betrifft eine Wasserkraftanlage zur Erzeugung elektrischer Energie durch Umwandlung aus dem Höhenunterschied von Gewässern resultierender potenzieller Energie mit einem Schneckenkörper und einem von dem Schneckenkörper angetriebenen Generator. Derartige Wasserkraftanlagen können an Fließgewässern, Wehrkanten, Staustufen, Ausleitungskanälen und so weiter verwendet werden. Eine Wasserkraftanlage diesen Typs ist beispielsweise aus der DE 4139134 A1 bekannt.

Der Generator einer solchen Wasserkraftanlage ist üblicherweise über einen Frequenzumrichter mit einem Netz verbunden, damit die Drehzahl des Generators unabhängig von der Netzfrequenz ist. Bei Ausfall des Netzes tritt das Problem auf, dass die Last für den Generator fehlt, wodurch die Bremswirkung des Generators auf den Schneckenkörper wegfällt und demzufolge die Drehzahl des Schneckenkörpers ansteigt. Um zu verhindern, dass die Drehzahl des Schneckenkörpers einen kritischen Drehzahlbereich erreicht, muss der Schneckenkörper abgebremst werden. Dies kann dadurch erfolgen, dass der Generator mit einer Wirbelstrombremse versehen ist. Bei dieser ist eine elektrisch gut leitende Metallscheibe auf der Rotorwelle des Generators angeordnet. Die Scheibe läuft in dem Luftspalt einer Spule, welche mit einem Gleichstrom, beispielsweise aus einer Autobatterie, beaufschlagt werden kann. Wenn nun der Generator abgebremst werden soll, wird ein Strom auf die Spule geschaltet, so dass in der Spule ein starkes Magnetfeld erzeugt wird. In der Metallscheibe werden Wirbelströme induziert, welche wiederum selbst ein Magnetfeld erzeugen, das dem äußeren Magnetfeld entgegengesetzt ist und die Platte somit bremst. Die Bremsenergie wird in der Metallscheibe in Wärme umgesetzt. Eine derartige Wirbelstrombremse ist sehr effizient und besitzt keine Verschleißteile wie z.B. Bremsbeläge.

Die Effizienz der Wirbelstrombremse hängt stark von der Drehzahl der Metallscheibe und damit des Generators ab. Mit sinkender Generatordrehzahl sinkt auch die Effizienz der Wirbelstrombremse. Bei Wasserkraftanlagen der eingangs genannten Art dreht der Schneckenkörper verhältnismäßig langsam. Es ist daher nicht automatisch eine hohe Generatordrehzahl gegeben.

Die EP 0 222 352 A2 offenbart eine Wasserkraftanlage, die mit einem Schneckenkörper arbeitet, welcher horizontal in einen Flusslauf eingebracht wird. Der Schneckenkörper in einem Tragrahmen aufgenommen, welcher auf einem Flussbett verankert ist. Ein Generator ist an den Schneckenkörper angeflanscht und ebenfalls im Flussbett aufgenommen.

Aus der WO 2008/031426 A2 ist eine Wasserkraftanlage bekannt, die mit einer Kaplan-Turbine arbeitet. Wasser wird oberwasserseitig gestaut und über eine Rohrleitung auf die Turbine geleitet, welche in einem geschlossenen Gehäuse aufgenommen ist.

Die US 2007/0216164 A1 beschreibt eine Windkraftanlage mit einem Bremswiderstand, der als Last mit einem Generator verbindbar ist.

Die EP 1863162 A2 offenbart eine elektrische Bremse und ein Schutzsystem für elektrische Generatoren, der bei denen ein Bremswiderstand eingesetzt wird.

Es ist Aufgabe der Erfindung, eine Wasserkraftanlage mit einem Schneckenkörper anzugeben, bei der die Bremswirkung bei einem Netzausfall verbessert ist.

Diese Aufgabe wird erfindungsgemäß durch eine Wasserkraftanlage gemäß Anspruch 1 gelöst.

Bei der erfindungsgemäßen Wasserkraftanlage wird die Wirbelstrombremse durch einen Bremswiderstand ersetzt. Dadurch kann auch bei langsam laufenden Generatoren, wie beispielsweise von einem Schneckenkörper getriebelos angetriebenen Torque-Generatoren, eine zuverlässige Bremswirkung sichergestellt werden, so dass es nicht zu einer gefährlichen Drehzahlüberhöhung des Schneckenkörpers kommen kann.

Vorzugsweise ist der Bremswiderstand derart dimensioniert, dass die Drehzahl des Schneckenkörpers bei Wegfall einer Belastung durch das Netz einen vorbestimmten Schwellwert nicht überschreitet. Eine darüber hinaus gehende Bremswirkung wird vermieden, da dies zu einer thermischen Überlastung des Bremswiderstandes führen könnte.

In unterschiedlichen Ausgestaltungen der erfindungsgemäßen Wasserkraftanlage wird der mindestens eine Bremswiderstand zwischen Generator und Frequenzumrichter geschaltet, an einen Zwischenkreis des Frequenzumrichters angeschlossen oder ausgangsseitig an den Frequenzumrichter angeschlossen. Insbesondere bei Anlagen mit einem konstanten Wasservolumen kann auf den Frequenzumrichter verzichtet werden. Der Bremswiderstand ist bei einer solchen Ausführung an den Ausgang des Generators angeschlossen.

Weitere vorteilhafte Ausgestaltungen der Erfindungen sind in den Unteransprüchen angegeben.

Die Erfindung wird nachfolgend anhand von Ausführungsbeispielen näher erläutert. Es zeigt:
Figur 1 ein erstes Ausführungsbeispiel einer erfindungsgemäßen Wasserkraftanlage und
Figur 2 ein zweites Ausführungsbeispiel einer erfindungsgemäßen Wasserkraftanlage.

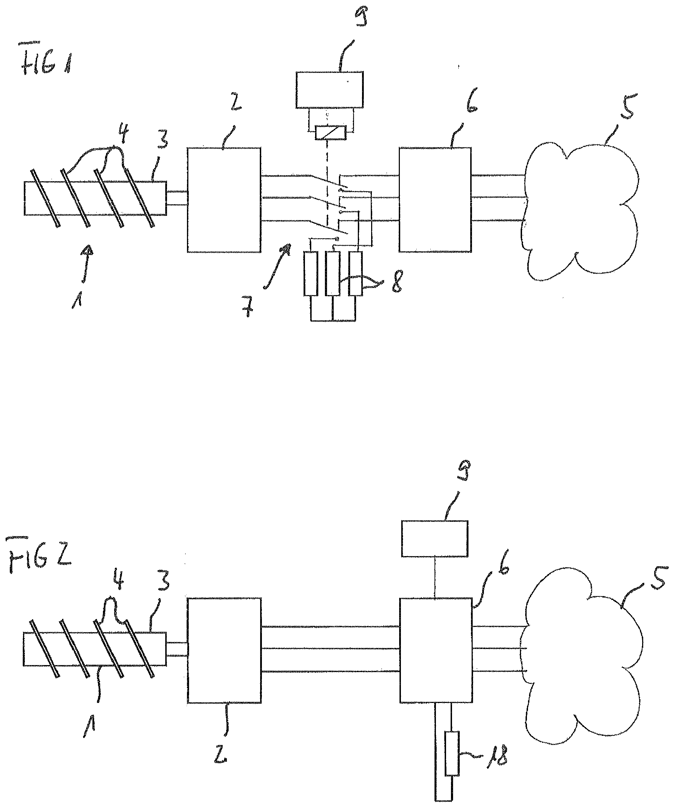

Bei der Wasserkraftanlage von Figur 1 ist ein Schneckenkörper 1 mit einem Generator 2 verbunden. Der Schneckenkörper 1 besitzt ein Zentralrohr 3 und Schneckenflügel 4, die auf dem Zentralrohr 3 angeordnet sind. Der Schneckenkörper 1 ist, was in der schematischen Darstellung von Figur 1 nicht zu erkennen ist, in einer realen Wasserkraftanlage geneigt angeordnet, so dass auf einer Seite Wasser in die Schneckengänge hineinfließen kann. Durch die Gewichtskraft des Wassers wird der Schneckenkörper in Rotation versetzt und dadurch zu einem Unterwasserspiegel transportiert, wo das Wasser die Schnecke verlässt.

Der Generator 2 ist in diesem Ausführungsbeispiel getriebelos ausgebildet und direkt oder über eine Kupplung mit dem Schneckenkörper 1 verbunden. Die Generatordrehzahl entspricht somit der Drehzahl des Schneckenkörpers, welche typischerweise im Bereich zwischen 20 und 80 Umdrehungen pro Minute liegt. Um bei derart niedrigen Drehzahlen effizient elektrische Energie erzeugen zu können, ist der Generator mit einem Vielpolrotor ausgestattet, der eine hohe Anzahl einzelner Permanentmagnete aufweist. Der Generator 2 arbeitet dadurch selbsterregend, das bedeutet, dass die Permanentmagnete ein Magnetfeld erzeugen, so dass eine Fremderregung nicht erforderlich ist.

Die vom Generator 2 erzeugte Wechselspannung hängt von der Drehzahl ab. Um elektrische Energie in ein Stromnetz 5 einspeisen zu können, muss die Frequenz der vom Generator 2 erzeugten Spannung in die Netzfrequenz umgewandelt werden. Dazu ist ein Frequenzumrichter 6 vorgesehen. Der Frequenzumrichter 6 weist einen Gleichrichter auf, der die vom Generator erzeugte Wechselspannung in eine Gleichspannung umwandelt, sowie einen Wechselrichter, der die Gleichspannung dann in eine Wechselspannung mit der Netzfrequenz umwandelt. Zwischen den Gleichrichter und den Wechselrichter ist ein kapazitiver Energiespeicher geschaltet, der als Puffer dient.

Im Ausführungsbeispiel von Figur 1 ist zwischen den Generator 2 und den Frequenzumrichter 6 ein dreiphasiger Umschalter 7 geschaltet, der die drei Phasen des Generatorausgangs jeweils von dem entsprechenden Eingang des Frequenzumrichters 6 trennt und stattdessen auf Bremswiderstände 8 schaltet, die sternförmig miteinander verbunden sind. Statt der Umschalter könnten auch einfache Schalter verwendet werden, da eine Trennung von dem Frequenzumrichter 6 nicht unbedingt erforderlich ist. Zum einen greift die Schaltung nur bei Netzausfall, das heißt ein Energiefluss vom Netz zum Generator ist ohnehin nicht zu erwarten, zum anderen kann die Trennung auch elektronisch in dem Wechselrichter erfolgen. Statt einer sternförmigen Schaltung der Bremswiderstände kann auch eine Dreiecksschaltung eingesetzt werden.

Die Umschaltvorrichtung 7 wird von einer Steuereinheit 9 angesteuert. Diese überwacht die Drehzahl des Schneckenkörpers beispielsweise anhand der Frequenz der vom Generator erzeugten Spannung. Es könnte auch ein Drehzahlsensor an dem Schneckenkörper 1 oder einem Schneckenrotor vorgesehen werden. Wenn das Überschreiten eines Drehzahl-Schwellwertes erkannt wird, werden die Umschalter betätigt und der Generator durch die Bremswiderstände 8 abgebremst. Besonders günstig ist es, wenn die Umschalter als Schütze ausgeführt sind, die durch die Ausgangsspannung der Wasserkraftanlage gehalten werden. Wenn bei einem Netzausfall diese Spannung abfällt, fallen auch die Schütze ab und der Generator bzw. der Frequenzumrichter wird mit dem oder den Bremswiderständen verbunden.

Die Steuereinheit 9 kann zudem so ausgebildet sein, dass sie einen Schieber betätigt, um den Zufluss von Wasser zu dem Schneckenkörper 1 zu unterbinden oder zu verringern. Während das Zuschalten der Bremswiderstände 8 ein schnelles Begrenzen oder Reduzieren der Schneckendrehzahl bewirkt, wirkt die Betätigung des Schiebers deutlich langsamer. Dennoch kann es erforderlich sein, diese zusätzliche Maßnahme vorzusehen, um ein Überhitzen der Bremswiderstände zu vermeiden. Dies ist insbesondere wichtig, wenn es zu einem längeren Netzausfall kommt. Netzausfälle im Bereich einiger Sekunden sind problemlos ohne Schließen des Schiebers zu bewältigen.

Beim Ausführungsbeispiel von Figur 2 ist ein Bremswiderstand 18 an einem Zwischenkreis des Frequenzumrichters 6 angeschlossen. Die Anordnung des Schneckenkörpers 1 und des Generators 2 entspricht der von Figur 1. Während beim Ausführungsbeispiel von Figur 1 drei Bremswiderstände erforderlich sind, kommt das Ausführungsbeispiel von Figur 2 mit nur einem Bremswiderstand aus, da der Zwischenkreis des Frequenzumrichters 6 mit Gleichspannung arbeitet. Ein Vorteil der Anordnung der Bremswiderstände 8 vor dem Frequenzumrichter 6, das heißt wie in Figur 1 dargestellt, besteht darin, dass keine besonders ausgestalteten Frequenzumrichter erforderlich sind. Vielmehr kann diese Maßnahme realisiert werden, ohne dass eine Anpassung beim Generator 2 oder beim Frequenzumrichter 6 erforderlich ist.

Eine dritte, in den Figuren nicht dargestellte Möglichkeit der Anordnung von Bremswiderständen besteht darin, diese Ausgangsseitig am Frequenzumrichter anzuschließen.
Die vorstehend beschriebene Erfindung ist mit verschiedenen Generatoren realisierbar, wie z.B. Synchrongeneratoren, Asynchrongeneratoren oder Gleichstromgeneratoren. Während Synchrongeneratoren als langsam drehende Vielpolmaschinen getriebelos gebaut werden können, benötigen z.B. Asynchronmaschinen eine höhere Drehzahl. Bei diesen Generatoren wird daher ein Getriebe eingesetzt, welches zwischen den Schneckenkörper und den Generator geschaltet ist.

## Patentansprüche

1. Wasserkraftanlage zur Erzeugung elektrischer Energie durch Umwandlung aus dem Höhenunterschied von Gewässern resultierender potenzieller Energie mit einem Schneckenkörper (1) und einem von dem Schneckenkörper (1) angetriebenen Generator (2),
**gekennzeichnet durch** mindestens einen Bremswiderstand (8; 18), der als Last mit dem Generator (2) verbindbar ist, wobei eine Steuereinheit (9) vorgesehen ist, die dazu eingerichtet ist, den Betriebszustand der Wasserkraftanlage hinsichtlich einer zu geringen Generatorbelastung zu überwachen und bei Feststellen einer zu geringen Generatorbelastung den mindestens einen Bremswiderstand als Last für den Generator zuzuschalten.

2. Wasserkraftanlage nach Anspruch 1,
**dadurch gekennzeichnet, dass**
der Generator getriebelos mit dem Schneckenkörper (1) verbunden ist.

3. Wasserkraftanlage nach einem der Ansprüche 1 oder 2,
**dadurch gekennzeichnet, dass**
der Bremswiderstand (8; 18) derart dimensioniert ist, dass die Drehzahl des Schneckenkörpers (1) bei Wegfall einer Belastung durch ein Netz (5) einen vorbestimmten Schwellwert nicht überschreitet.

4. Wasserkraftanlage nach einem der Ansprüche 1 bis 3,
**dadurch gekennzeichnet, dass**
eine Schaltvorrichtung (7) vorgesehen ist, um den Generator (2) mit dem mindestens einen Bremswiderstand (8; 18) zu verbinden.

5. Wasserkraftanlage nach einem der Ansprüche 1 bis 4,
**dadurch gekennzeichnet, dass**
zwischen den Generator (2) und das Netz (5) ein Frequenzumrichter (6) geschaltet ist und der Frequenzumrichter (6) eine Trennvorrichtung zur Trennung des Generators (2) von dem Netz (5) bildet.

6. Wasserkraftanlage nach einem der Ansprüche 1 bis 5,
**dadurch gekennzeichnet, dass**
das Überwachen des Betriebszustandes eine Überwachung der Ist-Drehzahl des Schneckenkörpers (1) beinhaltet.

7. Wasserkraftanlage nach Anspruch 6,
**dadurch gekennzeichnet, dass**
die Ist-Drehzahl des Schneckenkörpers (1) anhand der Frequenz der durch den Generator (2) erzeugten Spannung ermittelt wird.

8. Wasserkraftanlage nach einem der Ansprüche 1 bis 5,
**dadurch gekennzeichnet, dass**
das Überwachen des Betriebszustandes eine Überwachung des Leistungsflusses von dem Generator (2) in ein Netz (5) beinhaltet.

9. Wasserkraftanlage nach Anspruch 8,
**dadurch gekennzeichnet, dass**
der Leistungsfluss in einem zwischen dem Generator (2) und das Netz (5) geschalteten Frequenzumrichter (6) erfasst wird.

10. Wasserkraftanlage nach einem der Ansprüche 1 bis 9,
**dadurch gekennzeichnet, dass**
der Generator ein permanent erregter Generator ist.

11. Wasserkraftanlage nach einem der Ansprüche 1 bis 9,
**dadurch gekennzeichnet, dass**
der Generator ein Asynchrongenerator ist.

12. Wasserkraftanlage nach Anspruch 11,
**dadurch gekennzeichnet, dass**
der Generator ein doppelt gespeister Asynchrongenerator ist.

13. Wasserkraftanlage nach einem der Ansprüche 1 bis 9,
**dadurch gekennzeichnet, dass**
der Generator ein Gleichstromgenerator ist.

14. Wasserkraftanlage nach Anspruch 11,
**dadurch gekennzeichnet, dass**
der Generator ein Kaskadengenerator ist.

15. Wasserkraftanlage nach einem der Ansprüche 1 bis 14,
**dadurch gekennzeichnet, dass**
der Bremswiderstand über einen elektromechanischen Schalter mit den Anschlussklemmen des Generators gekoppelt ist.

16. Wasserkraftanlage nach einem der Ansprüche 1 bis 9,
**dadurch gekennzeichnet, dass**
der Bremswiderstand als Bremschopper realisiert ist.

## Claims

1. Water power plant for generating electric energy by conversion of potential energy resulting from the height difference of waters, having a worm body (1) and a generator (2) driven by the worm body (1),
**characterized by** at least one brake resistor (8; 18), which is connectable to the generator (2) as a load, wherein a control unit (9) is provided, which is configured to monitor the operating state of the water power plant for a generator load being too low and to connect the at least one brake resistor as a load for the generator when determining that the generator load is too low.

2. Water power plant according to claim 1,
**characterized in that**
the generator is connected to the worm body (1) in a gearless manner.

3. Water power plant according to one of claims 1 or 2,
**characterized in that**
the brake resistor (8; 18) is dimensioned such that the rotational speed of the worm body (1) does not exceed a predetermined threshold when a load is removed from a power network (5).

4. Water power plant according to one of claims 1 to 3,
**characterized in that**
a switching device (7) is provided to connect the generator (2) with the at least one brake resistor (8; 18).

5. Water power plant according to one of claims 1 to 4,
**characterized in that**
a frequency converter (6) is connected between the generator (2) and the power network (5) and the frequency converter (6) forms a separating device for separating the generator (2) from the power network (5).

6. Water power plant according to one of claims 1 to 5,
**characterized in that**
monitoring the operating state includes a monitoring of the actual rotational speed of the worm body (1).

7. Water power plant according to one claim 6,
**characterized in that**
the actual rotational speed of the worm body (1) is determined by means of the frequency of the voltage generated by the generator (2).

8. Water power plant according to one of claims 1 to 5,
**characterized in that**
monitoring the operating state includes a monitoring of the power flow from the generator (2) into a power network (5).

9. Water power plant according to one claim 8,
**characterized in that**
the power flow is detected in a frequency converter (6) connected between the generator (2) and the power network (5).

10. Water power plant according to one of claims 1 to 9,
**characterized in that**
the generator is a permanently excited generator.

11. Water power plant according to one of claims 1 to 9,
**characterized in that**
the generator is an asynchronous generator.

12. Water power plant according to claim 11,
**characterized in that**
the generator is a double-fed asynchronous generator.

13. Water power plant according to one of claims 1 to 9,
**characterized in that**
the generator is a DC generator.

14. Water power plant according to claim 11,
**characterized in that**
the generator is a cascade generator.

15. Water power plant according to one of claims 1 to 14,
**characterized in that**
the brake resistor is coupled to the connection terminals of the generator via an electromagnetic switch.

16. Water power plant according to one of claims 1 to 9,
**characterized in that**
the brake resistor is realized as a brake chopper.

## Revendications

1. Centrale hydroélectrique destinée à la production d'énergie électrique par conversion d'énergie potentielle résultant de la différence en hauteur d'eaux, comprenant un corps de vis sans fin (1) et un générateur (2) entraîné par le corps de vis sans fin (1),
**caractérisée par** au moins une résistance de freinage (8 ; 18) qui peut être reliée au générateur (2) en tant que charge, une unité de commande (9) étant prévue, laquelle est configurée pour surveiller l'état de fonctionnement de la centrale hydroélectrique au regard d'une charge du générateur trop faible et, lors de la constatation d'une charge du générateur trop faible, pour raccorder l'au moins une résistance de freinage en tant que charge pour le générateur.

2. Centrale hydroélectrique selon la revendication 1,
**caractérisée en ce que**
le générateur est relié sans engrenage au corps de vis sans fin (1).

3. Centrale hydroélectrique selon l'une quelconque des revendications 1 ou 2,
**caractérisée en ce que**
la résistance de freinage (8 ; 18) est dimensionnée de façon à ce que la vitesse de rotation du corps de vis sans fin (1), en cas de défaillance d'une charge par un réseau (5), ne dépasse pas une valeur seuil prédéterminée.

4. Centrale hydroélectrique selon l'une quelconque des revendications 1 à 3,
**caractérisée en ce qu'**
un dispositif de commutation (7) est prévu afin de relier le générateur (2) à l'au moins une résistance de freinage (8; 18).

5. Centrale hydroélectrique selon l'une quelconque des revendications 1 à 4,
**caractérisée en ce qu'**
un convertisseur de fréquence (6) est raccordé entre le générateur (2) et le réseau (5) et **en ce que** le convertisseur de fréquence (6) forme un dispositif de coupure destiné à couper le générateur (2) du réseau (5).

6. Centrale hydroélectrique selon l'une quelconque des revendications 1 à 5,
**caractérisée en ce qu'**
la surveillance de l'état de fonctionnement comporte une surveillance de la vitesse de rotation réelle du corps de vis sans fin (1).

7. Centrale hydroélectrique selon la revendication 6,
**caractérisée en ce que**
la vitesse de rotation réelle du corps de vis sans fin (1) est déterminée à l'aide de la fréquence de la tension générée par le générateur (2).

8. Centrale hydroélectrique selon l'une quelconque des revendications 1 à 5,
**caractérisée en ce que**
la surveillance de l'état de fonctionnement comporte une surveillance du flux de puissance du générateur (2) dans un réseau (5).

9. Centrale hydroélectrique selon la revendication 8,
**caractérisée en ce que**
le flux de puissance est enregistré dans un convertisseur de fréquence (6) couplé entre le générateur (2) et le réseau (5).

10. Centrale hydroélectrique selon l'une quelconque des revendications 1 à 9,
**caractérisée en ce qu'**
le générateur est un générateur à excitation permanente.

11. Centrale hydroélectrique selon l'une quelconque des revendications 1 à 9,
**caractérisée en ce qu'**
le générateur est un générateur asynchrone.

12. Centrale hydroélectrique selon la revendication 11,
**caractérisée en ce que**
le générateur est un générateur asynchrone à double alimentation.

13. Centrale hydroélectrique selon l'une quelconque des revendications 1 à 9,
**caractérisée en ce qu'**
le générateur est un générateur à courant continu.

14. Centrale hydroélectrique selon la revendication 11,
**caractérisée en ce que**
le générateur est un générateur en cascade.

15. Centrale hydroélectrique selon l'une quelconque des revendications 1 à 14,
**caractérisée en ce que**
la résistance de freinage est couplée aux bornes de connexion du générateur par l'intermédiaire d'un commutateur électromécanique.

16. Centrale hydroélectrique selon l'une quelconque des revendications 1 à 9,
**caractérisée en ce que**
la résistance de freinage est réalisée en tant que chopper de freinage.
